# EUROPEAN PATENT APPLICATION

(11) **EP 1 334 814 A1**
(43) Date of publication of application: **13.08.2003**
(21) Application number: 02075548.4
(22) Date of filing: 11.02.2002
(51) Int. Cl.: B29C 45/27

(54) **Locking means against rotation**

(71) Applicant: Synventive Molding Solutions B.V., 3295 ZJ 's-Gravendeel (NL)
(72) Inventor: Sattler, Peter, 64673 Zwingenberg (DE)
(74) Representative: van Westenbrugge, Andries

(57) **Abstract**

The invention relates to an assembly of a locking device and a fixing device for locking the angular position of a nozzle relative to a manifold of an injection-molding device. The assembly comprises a locking ring with notches for engaging with pins on the manifold to place the nozzle in a fixed angular orientation relative to that manifold. This has as an advantage that the nozzle and the manifold can be fixed in a form fitting manner such that, after locking, the nozzle and the manifold are prevented from rotating relative to each other.

## Description

The invention relates to an assembly of an elongate first structure and a second structure, interconnected via a screw thread on a connecting part of the elongate first structure and a bore in the second structure having complementary screw threads and receiving the connecting part.

The invention relates in particular to an assembly of a nozzle and manifold of an injection-molding device to a locking member locking the angular position of the nozzle relative to the manifold.

Screw connections are known from the prior art that are self-locking when applied properly. There are however several factors which may cause a screw connection between two parts when screwed together to loosen. Among these are: varying stresses on the screw connection caused by movement, varying temperatures on the interconnected members caused by heating and cooling and applying a higher torque to the interconnected members than required for locking contrary to installation instructions. Especially when a nozzle of an injection molding device is screwed into a manifold, such that the melt passage of the nozzle is in line with the channel in the manifold through which molten thermoplastic material is applied at high temperature and pressure, loosening of the screw connection may lead to molten thermoplastic material leaking into the injection molding device. Moreover, when from the nozzle at a forward end an insert has to be removed after operation, solidified molten thermoplastic material may cause a bond between the insert and the nozzle. This bond may be so strong that upon screwing, instead of a rotation of the insert relative to the nozzle, a rotation of the complete nozzle may result by which the nozzle may become unscrewed from its manifold.

It is an object of the present invention to provide an assembly of two structures interconnected via a screw connection that avoids the problems above mentioned.

It is in particular an object of the present invention to provide a nozzle and manifold, in which untightening of the screw connection of the nozzle is prevented and which provides a reliable and leakage-free connection under conditions of high temperature and pressure.

Thereto, the assembly according to the present invention is characterized in that the assembly comprises a substantially ring-shaped locking member placed around the elongate first structure, having along an inner circumferential surface a number of spaced-apart adjusting notches or projections, the elongate first structure having on an outer circumferential surface a number of spaced apart complementary projections or notches, for engaging with the notches or projections on the locking member, and for placing the locking member in a fixed angular orientation on the elongate first structure, the locking member comprising on an outer circumferential surface a number of spaced-apart notches or projections, for engaging with at least one fixed position complementary notch or projection on the second structure for placing the locking member in a fixed angular orientation with respect to the second structure.

This has as an advantage that the elongate first structure and the second structure can be fixed in a form fitting manner such that, after locking, the elongate first structure and the second structure are prevented from rotating relative to each other.

After connecting the first and second structures with the required torque, the ring-shaped locking member can be placed on the elongate first structure in a number of fixed orientations, by engagement of the adjusting notches or projections on the inner surface with the notches or projections on the elongate structure. In the required position, the outer circumferential surface of the locking member engages with a notch or projection on the second structure, to fix the locking member in orientation with respect to the second member.

In one embodiment, the first structure is a nozzle of an injection-molding device. The projections on the nozzle for engaging with the ring-shaped locking member may be formed by the polygonally arranged facets, such as a six-sided bolt. This has as an advantage that the nozzle can be engaged with a fastening tool at the bolt upon connection of the nozzle with the manifold. The inner cicumferential surface of the locking ring may comprise a multi-facetted structure, such as twelve-spaced apart notches, for engaging with the points of intersection of adjacent polygonal surfaces on the nozzle. This has as an additional advantage that the locking device can be used on already existing connections as for instance between nozzles and manifolds mentioned above.

In another embodiment the locking ring has at its inner side twelve edges which are shaped to fit over a six edge shaped nozzle as commonly found in the molding injection industry, which has to be locked and sealed. The circumferential surface of the locking ring comprises several small notches. These notches are constructed in such a way that they have a certain amount of elasticity, which has as an advantage that it is possible to deform these notches slightly so that they will easily fit. The space between the adjacent notches is designed to fit over two pins, which are connected to the second structure to which the nozzle has to be locked and sealed. This second structure may be another pipe or in the case of an injection molding device the extension coming from an injection manifold.

In yet another embodiment the ratio of the number of notches on the inner surface of the locking ring and the number of notches on the outer surface of the locking ring does not equal an integer number Also, the ratio of the number of notches on the inner surface of the locking ring and the number of projections on the elongate structure does equal an integer number. Hereby, the position of the notches on the outer surface of the locking ring with respect to the pins in the manifold gradually changes upon successively rotating the locking ring around the nozzle by an angle that equals 360 degrees over the number of notches on the inner surface of the locking ring.

Rotating the locking ring around the nozzle until it fits with its notches almost exactly in between the two pins, in combination with the elasticity of the notches, has as an advantage that there will always result an orientation of the locking ring around the nozzle such that the pins will fit in between the notches. In this way the position of the locking ring relative to the manifold is fixed, and since the locking ring is directly and form-fittingly connected to the nozzle, the position of the nozzle relative to the extension is fixed as well. Since the screw connection is known to be self sealing in properly applied position, a permanent sealing screw connection has been obtained.

Providing notches over the complete perimeter of the outer side of the locking ring and connecting the locking ring detachably to the first structure has the advantage that virtually every start position of the first structure with respect to the second structure can be locked.

Some embodiments of an assembly comprising a locking device according to the invention will now be explained in detail with reference to the accompanied drawings.

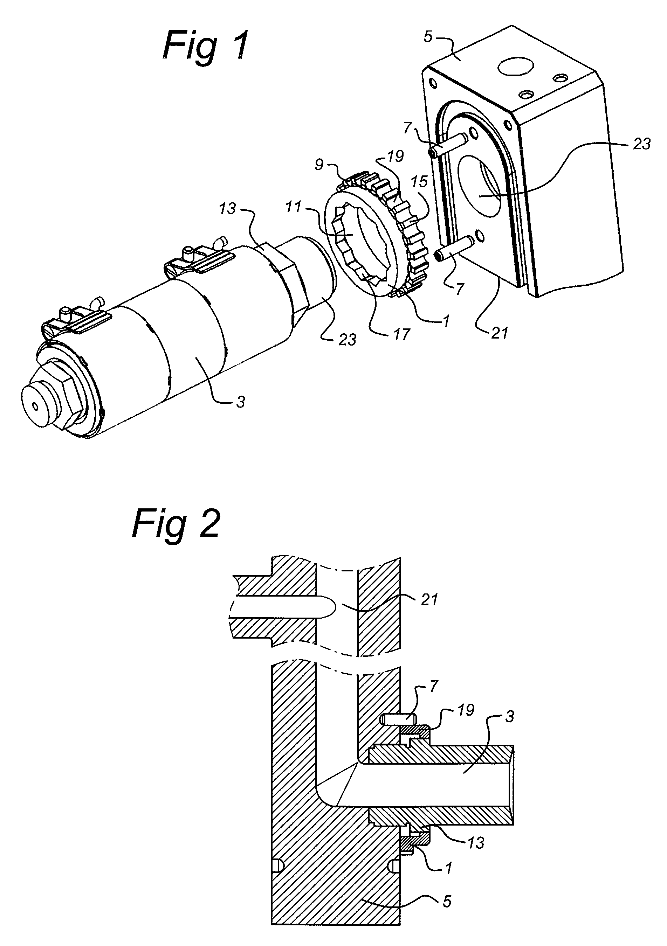

In fig. 1 an assembly of an injection molding nozzle and manifold is shown in an exploded perspective view.

In fig 2 a cross-sectional view of the upper part of the interconnected nozzle and manifold of fig 1 is shown.

In the figures reference numeral 1 indicates the locking ring. This locking ring 1 has an inner surface 11 with twelve edges of which one is indicated with reference numeral 17 and an outer surface 9 with several notches of which one is indicated with reference numeral 15. The locking ring connects a nozzle 3 which has a six sided connection member 13 used for fastening the nozzle with a fastening tool such as a spanner or a wrench, mating with the inner surface 11 of the locking ring 1. Fixing pins 7 are situated in a manifold 5, designed to fit almost exactly in the space 19 between adjacent notches. The fixing pins 7 are detachably connected to the injection manifold 5. The nozzle 3 and the manifold 5 have complementary screw threads 23. The nozzle 3 is connected to the injection manifold extension 21.

The locking device is brought into position as follows. First, the nozzle 3 is screwed on the injection manifold 5, until the specified torque is reached. The fixing pins 7 are placed into the injection manifold 5. Then, the locking ring 1 is placed with its twelve-sided-inner surface 11 over the six edged shaped part 13 of the nozzle 3. Now if the fixing pins 7 fit engagingly between the spaces 19 between two adjacent notches of the surface 9 of the locking ring 1, the locking is established immediately. However, generally this will not be the case. Then, the locking ring 1 has to be rotated over an angle of (360/N) degrees, where N is the number of edges of the inner surface 11 of the locking ring 1, which, in this case, is 30 degrees. This has to be repeated until the fixing pins 7 fit engagingly between the spaces 19 between two adjacent notches of the surface 9 of the locking ring 1 and the locking is established.

## Claims

1. Assembly of an elongate first structure (3) and a second structure (5), interconnected via a screw thread on a connecting part of the elongate first structure (3) and a bore in the second structure (5) having complementary screw threads (23) and receiving the connecting part, **characterized in that** the assembly comprises a substantially ring-shaped locking member (1) placed around the elongate first structure (3), having along an inner circumferential surface (11) a number of spaced-apart adjusting notches or projections (17), the elongate first structure (3) having on an outer circumferential surface a number of spaced apart complementary projections or notches (13), for engaging with the notches or projections (17) on the substantially ring-shaped locking member (1), and for placing the substantially ring-shaped locking member (1) in a fixed angular orientation on the elongate first structure (3), the substantially ring-shaped locking member (1) comprising on an outer circumferential surface (9) a number of spaced-apart notches or projections (15), for engaging with at least one fixed position complementary notch or projection (7) on the second structure (5) for placing the substantially ring-shaped locking member (1) in a fixed angular orientation with respect to the second structure (5).

2. Assembly according to claim 1, **characterized in that** the elongate first structure (3) comprises on its outer circumferential surface a number of polygonally arranged facets or edges (13) for engaging with a fastening tool.

3. Assembly according to claim 1 or 2, **characterized in that** the ring-shaped locking member (1) comprises along its inner circumferential surface (11) a number of notches or projections (17) and along its outer circumferential surface (9) a number of notches or projections (19) and the ratio of the number of notches or projections (17) along its inner circumferential surface (11) and number of notches or projections (19) along its outer circumferential surface (9) does not equal an integer number.

4. Assembly according to claim 3, **characterized in that** the ratio of the number of notches or projections (17) on the inner circumferential surface (11) of the ring-shaped locking member (1) over the number of notches or projections (13) on the elongate first structure (3) does equal an integer number.

5. Assembly according to any of the preceding claims, **characterized in that** the ring-shaped locking member (1) comprises on the outer circumferential surface (9) a number of regularly spaced notches or projections (19), and the second structure (5) comprises at least one cylindrical pin (7), engagingly fitting in the notches.

6. Assembly according to claim 5, **characterized in that** the notches or projections (19) are resilient.

7. Assembly according to any of the preceding claims, **characterized in that** the first elongate structure (3) comprises a nozzle of an injection molding device and the second structure (5) comprises a manifold of an injection molding device.
